# FASCICULE DE BREVET EUROPEEN

(11) **EP 0 491 898 B1**
(45) Date de publication et mention de la délivrance du brevet: **18.05.1994**
(21) Numéro de dépôt: 91911817.4
(22) Date de dépôt: 11.07.1991
(51) Int. Cl.: B62D 43/04

(54) **DISPOSITIF DE FIXATION DE ROUE DE SECOURS**
RESERVERAD HALTEVORRICHTUNG
SPARE WHEEL SECURING DEVICE

(30) Priorité: 13.07.1990 CH 2342/90
(43) Date de publication de la demande: 01.07.1992
(73) Titulaire: MASSON, Willy, CH-1066 Epalinges (CH)
(72) Inventeur: MASSON, Willy, CH-1066 Epalinges (CH)
(74) Mandataire: Hranitzky, Wilhelm Max
(86) Numéro de dépôt international: CH9100149
(87) Numéro de publication internationale: WO9200871

(56) Documents cités:
- US-A- 3 556 325
- US-A- 3 790 012
- US-A- 3 904 093

## Description

L'invention concerne un dispositif pour fixer un support de roue de secours sous le châssis d'un véhicule routier, ce châssis comprenant deux éléments profilés allongés, parallèles à l'axe longitudinal du véhicule, présentant chacun à leur partie inférieure un rebord plat horizontal s'étendant vers l'intérieur du véhicule, ce dispositif étant agencé de manière à permettre le pivotement du support de roue de secours autour d'un axe parallèle à la longueur desdits éléments profilés.

Il existe déjà un dispositif de fixation de ce genre qui est utilisé pour fixer, sous le châssis d'un véhicule routier lourd, tel qu'un camion ou une remorque, un support de roue de secours de type connu qui comporte deux bras de soutien réunis entre eux, à l'une de leurs extrémités, et s'écartant l'un de l'autre en direction de l'autre extrémité, en formant un ensemble de forme générale triangulaire, ces bras étant coudés et formant des branches parallèles entre elles s'étendant vers leurs extrémités libres qui sont agencées pour permettre le passage des pivots d'articulation du support de roue. Dans ce dispositif connu, la fixation du support de roue de secours au châssis du véhicule est réalisée par soudage de deux pièces de fixation, destinée chacune à retenir l'un des bras de soutien du support de roue, sur la face verticale de l'un desdits éléments profilés tournée vers l'intérieur du véhicule. Un tel mode de fixation permet de solidariser les pièces de fixation avec le châssis de manière solide, ce qui est nécessaire compte tenu du poids important de la roue de secours et des secousses qui se produisent lors du mouvement du véhicule. Toutefois, il présente l'inconvénient d'être relativement long et difficile à réaliser et également de ne pas permettre une adaptation ultérieure de la position des pièces de fixation en cas de modification des dimensions de la roue ou de la position d'accrochage du support de roues sous le plancher du véhicule.

D'autre part, le brevet US-A-3904093 décrit un dispositif permettant également de fixer un support de roue de secours sous un véhicule routier dont le châssis comprend deux profilés, parallèles à l'axe longitudinal du véhicule. Dans ce dispositif, des pièces de fixation servant d'intermédiaire pour un levier d'accrochage du support de roue de secours sont solidarisées par boulonnage avec chacun desdits profilés.

Ce dispositif est agencé pour permettre le pivotement du support de roue de secours autour d'un axe perpendiculaire, et non pas parallèle, à la longueur des profilés. Par conséquent, il ne permet d'accéder à la roue de secours que par l'arrière du véhicule, alors que le dispositif qui fait l'objet de la présente invention permet, lui, I'accès à la roue de secours par le côté du véhicule.

Le dispositif décrit dans le brevet US-A-3904093 présente donc l'inconvénient d'être mal adapté à l'utilisation dans le cas des véhicules routiers tractant une remorque, puisqu'il nécessite de décrocher celle-ci pour pouvoir accéder aisément à la roue de secours.

L'invention a pour but de permettre de remédier à ces inconvénients.

A cet effet, le dispositif de fixation selon l'invention comporte au, moins une pièce de fixation ayant au moins une partie plate, agencée de manière à pouvoir prendre appui sur la partie inférieure d'au moins l'un desdits éléments profilés, et à être solidarisée de manière amovible avec cet élément ou ces éléments, par pincement dudit rebord plat entre ladite partie plate et au moins un organe de retenue collaborant avec la pièce de fixation, et des moyens pour raccorder le support de roue à cette pièce de fixation.

D'autres caractéristiques et avantages de l'invention apparaîtront grâce à la description détaillée donnée ci-dessous, à titre d'exemples non-limitatifs, de deux formes d'exécution de l'invention, en se référant au dessin annexé dans lequel:

La Fig. 1 est une vue d'ensemble, en élévation latérale et coupe partielle, montrant la manière dont un support de roue de type usuel est fixé sous le châssis d'un véhicule routier, au moyen du dispositif de fixation selon l'invention, conformément à une première forme d'exécution de ce dispositif.

La Fig. 1A représente une variante de la forme d'exécution du dispositif selon l'invention illustrée à la Fig. 1.

La Fig. 2 est une vue de détail, en élévation de face, à échelle agrandie par rapport à celle de la Fig. 1, montrant la manière dont un bras d'accrochage faisant partie d'un support de roue de secours de type usuel est monté sur le châssis au moyen du dispositif de fixation représenté à la Fig. 1.

La Fig. 3 est une vue d'ensemble, en élévation latérale et en coupe, montrant la manière dont un support de roue du même type que celui qui est représenté à la Fig. 1 est fixé sous le châssis d'un véhicule routier au moyen du dispositif de fixation selon l'invention, conformément à une deuxième forme d'éxécution de ce dispositif.

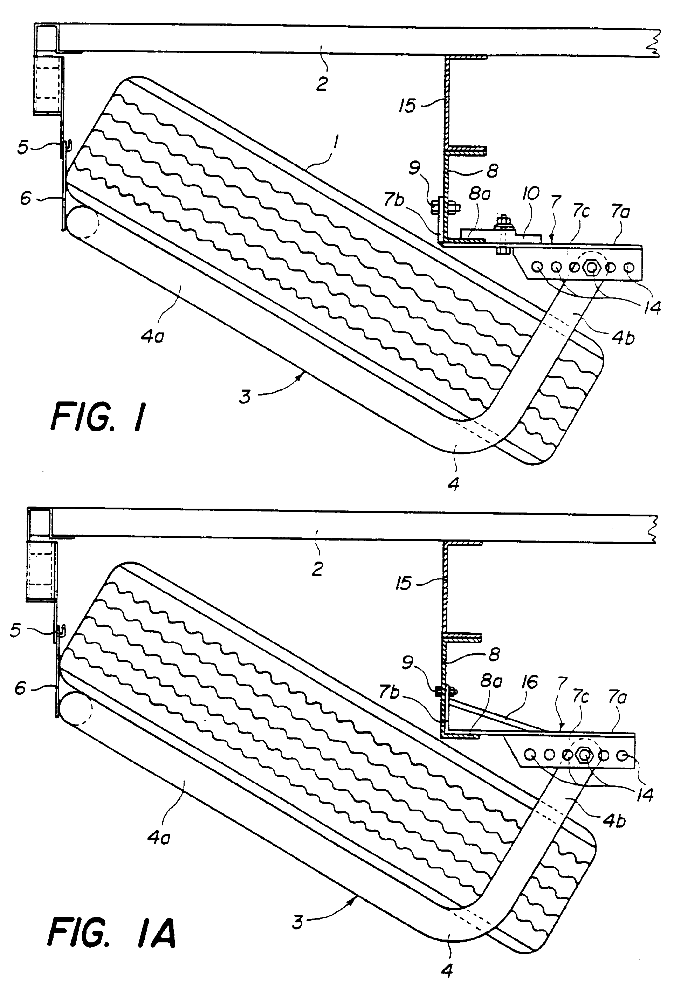

Comme on le voit à la Fig. 1, une roue de secours 1 est accrochée, en position inclinée, sous le plancher 2 d'un véhicule routier, tel qu'un camion, au moyen d'un support 3 de roue de secours de type usuel, ayant une forme générale triangulaire, comprenant deux bras de soutien 4 recourbés (dont un seul est visible à la Fig. 1) assemblés entre eux. La partie du support 3, vers laquelle concourent les branches les plus longues 4a des bras de soutien 4, est accrochée, de manière amovible, sous le bord latéral du plancher 2 du véhicule, au moyen d'un organe de suspension allongé 6 fixé au moyen d'un crochet 5. Le plancher 2 du véhicule est fixé sur le châssis de celui-ci par l'intermédiaire d'un faux châssis comprenant deux éléments profilés 15 (dont un seul est représenté à la Fig. 1).

Les extrémités libres des branches les plus courtes 4b de chacun des bras de soutien 4 sont montées, de manière pivotante, sur une pièce de fixation 7, comme décrit en détail dans la suite de la description.

La pièce de fixation 7 comprend une partie plane horizontale 7a et une partie plane verticale 7b et elle peut être réalisée de toute manière appropriée, par exemple par assemblage à angle droit de deux plaques, notamment par soudage, ou encore par pliage d'une seule plaque allongée.

La pièce de fixation 7 est fixée sur un élément profilé 8, qui fait partie du châssis du véhicule, d'une part en solidarisant la partie verticale 7b de la pièce 7 avec la face extérieure de l'élément 8, au moyen de boulons 9, et, d'autre part, au moyen de deux brides 10 (dont une seule est visible à la Fig. 1) boulonnées sur la partie horizontale 7a de la pièce 7 et pinçant le rebord plat horizontal 8a de l'élément profilé 8. On réalise ainsi très facilement un assemblage démontable et très solide de la pièce de fixation 7 sur l'élément 8 du châssis du véhicule.

Deux plaques de fixation 7c verticales (dont une seule est visible à la Fig. 1) sont montées, sous la face inférieure de la partie horizontale 7a de la pièce de fixation 7, par exemple par soudage, parallèlement à la direction longitudinale de la pièce de fixation, en laissant entre elles un écartement légèrement supérieur à la largeur de l'extrémité de la branche la plus courte 4b du bras de soutien 4.

Conformément à la variante représentée à la Fig. 1A, la pièce de fixation 7 est fixée sur l'élément profilé 8, non pas au moyen de brides 10, mais simplement par boulonnage, au moyen de boulons 9, les parties verticale 7b et horizontale 7a de la pièce 7 prenant appui, respectivement, sur la face intérieure de la partie verticale du profilé 8 et sur la face supérieure du rebord plat horizontal 8a.

Selon cette variante, la pièce 7 est avantageusement (mais pas nécessairement) munie d'une tige de renforcement 16 comme illustré à la Fig. 1A.

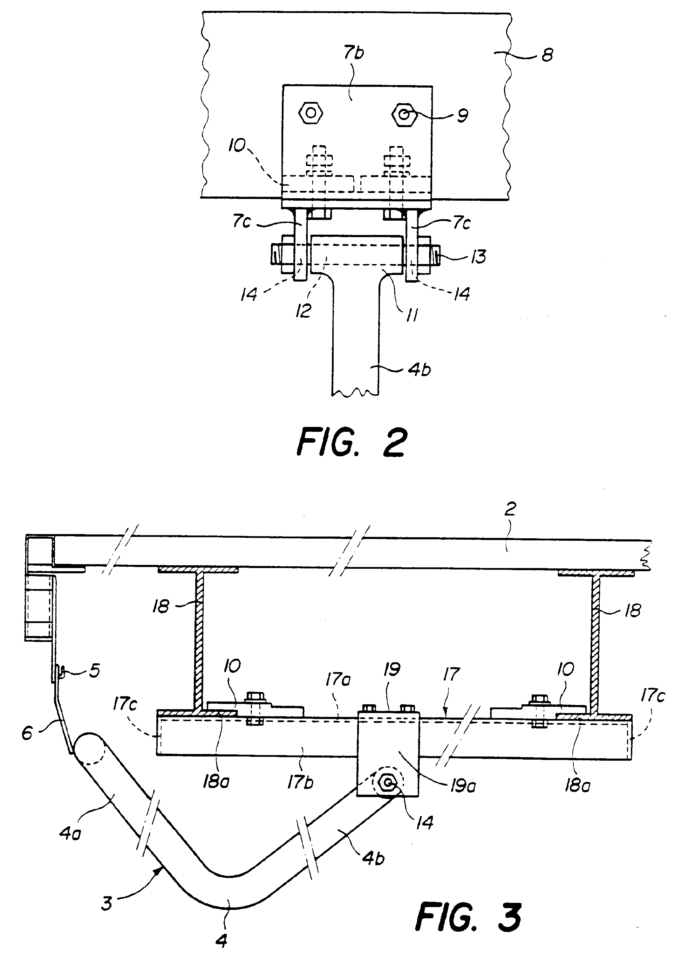

Comme on le voit à la Fig. 2, l'extrémité de la branche la plus courte 4b du bras de soutien 4 forme une partie élargie 11, de forme générale cylindrique, dont les génératrices sont perpendiculaires à la direction longitudinale de la branche 4b, et elle est percée d'un alésage axial 12 permettant le passage d'une tige 13 à extrémités filetées, boulonnée à chacune de ses extrémités, de façon à fixer, de manière amovible, la partie d'extrémité 11 de la branche 4b de la barre de soutien 4 autour d'un axe horizontal reliant deux trous 14 pratiqués respectivement dans chacune des plaques 7c, en regard l'un de l'autre.

Conformément à la forme d'exécution représentée aux figures 1, 1A et 2, les plaques de fixation verticales 7c sont chacune munies d'une rangée de plusieurs trous cylindriques 14, à axes parallèles entre eux, situés dans un même plan horizontal, ces trous étant, par exemple, au nombre de six, comme illustré à la Fig. 1. Ceci permet une adaptation automatique de la position de montage de la branche 4b du bras de soutien 4, aux dimensions du support 3 ainsi qu'à celles de la roue de secours 1 elle-même, simplement en utilisant des couples de trous 14 différents.

Conformément à la forme d'exécution du dispositif selon l'invention représenté à la Fig. 3, une pièce de fixation 17 allongée est montée sur les deux éléments profilés 18 du châssis d'un véhicule routier, tel qu'une remorque de camion. La pièce de fixation 17 présente, sur toute sa longueur, une surface supérieure plate 17a dont chacune des deux parties d'extrémité est appliquée sous les rebords inférieurs 18a et 18b d'un des éléments profilés 18. Le rebord 18a de chacun des éléments 18 qui s'étend vers l'intérieur du véhicule est pincé entre la partie d'extrémité correspondante de la surface supérieure 17a de la pièce de fixation 17 et deux brides 10 (dont une seule est visible à la Fig. 3) boulonnées sur la partie supérieure 17a de la pièce de fixation 17.

La pièce de fixation 17 comprend également deux parties latérales verticales 17b et deux cloisons verticales d'extrémité 17c qui contribuent à augmenter sa rigidité mécanique.

Un support 3 de roue de secours, du même type que celui qui est représenté à la Fig. 1, est fixé sous le châssis du véhicule de manière similaire à celle qui est illustrée à la Fig. 1, ce support étant toutefois représenté, à la Fig. 3, avec ses branches partiellement arrachées et sans montrer la roue de secours elle-même.

Le montage de l'extrémité libre de la branche la plus courte 4b du bras de soutien 4 sur la pièce de fixation 17 est effectué par l'intermédiaire d'un organe de liaison 19, solidaire de la pièce 17, et comprenant deux plaques verticales 19a (dont une seule est visible à la Fig. 3) ayant la même fonction que les plaques 7c de la pièce de fixation 7 selon la forme d'exécution illustrée aux Figures 1 et 2.

Les deux plaques verticales 19a de l'organe de liaison 19 sont réunies entre elles par une plaque médiane horizontale boulonnée sur la face supérieure 17a de la pièce de fixation 17. Conformément à une variante de la forme d'exécution représentée à la Fig. 3, l'organe de liaison 19 pourrait être soudé sur la face supérieure 17a de la pièce de fixation 17 en constituant ainsi une partie intégrante de cette dernière.

Selon la forme d'exécution représentée à la Fig. 3, les plaques verticales 19a sont percées chacune d'un seul trou 14 pour le passage d'une tige d'articulation de l'extrémité de la branche 4b du bras 4 du support de roue de secours 3, mais il est clair qu'elles pourraient également comporter une série de trous 14, comme dans le cas des plaques de fixation verticales 7c de la pièce de fixation 7 représentée aux Figures 1 et 2.

Bien entendu, l'ensemble du dispositif comprend deux pièces de fixation 7 ou 17 montées, selon le cas, sur un élément 8 ou entre deux éléments 18 du châssis, à une certaine distance l'une de l'autre, correspondant à l'écartement mutuel des branches 4b de deux bras de soutien 4 du support de roue de secours.

Plusieurs variantes peuvent être apportées dans la manière dont la pièce de fixation 7 ou 17 est assemblée avec l'élément profilé 8 ou 18, ainsi que celle dont l'organe de liaison 19 est monté sur la pièce de fixation 17.

Ainsi, par exemple, les faces des parties 7a à 7b de la pièce de fixation 7 appliquées contre le rebord plat 8a ou la partie verticale du profilé 8 pourraient être à la fois boulonnées et collées, ou bien simplement collées ou boulonnées avec ou sans utilisation d'un organe de retenue supplémentaire tel que les brides 10.

Il est est de même en ce qui concerne le mode d'assemblage de la pièce 17 avec les deux éléments profilés 18.

De façon analogue, l'organe de liaison 19 pourrait être à la fois boulonné et collé, ou bien seulement collé ou boulonné sur la pièce 17, en utilisant éventuellement des organes de retenue additionnels, tels que, par exemple, des brides similaires aux brides 10.

Il est à noter que ces derniers organes de retenue, de même que les brides 10, peuvent être, éventuellement, fixés par tout mode de fixation approprié, tel que collage, boulonnage, soudage, ou par toute combinaison d'au moins deux de ces modes de fixation.

## Revendications

1. Dispositif pour fixer un support de roue de secours sous le châssis d'un véhicule routier, ce châssis comprenant deux éléments profilés allongés (8,18) parallèles à l'axe longitudinal du véhicule, présentant chacun à leur partie inférieure un rebord plat horizontal (8a, 18a) s'étendant vers l'intérieur du véhicule, ce dispositif étant agencé de manière à permettre le pivotement du support de roue de secours autour d'un axe parallèle à la longueur desdits éléments profilés, caractérisé en ce qu'il comporte au moins une pièce de fixation (7,17) ayant au moins une partie plate (7a, 17a), agencée de manière à pouvoir prendre appui sur la partie inférieure d'au moins l'un desdits éléments profilés (8, 18), et à être solidarisée de manière amovible avec cet élément ou ces éléments (8, 18), par pincement dudit rebord plat (8a, 18a) entre ladite partie plate (7a, 17a) et au moins un organe de retenue (10) collaborant avec la pièce de fixation (7, 17), et des moyens pour raccorder le support de roue à cette pièce de fixation.

2. Dispositif selon la revendication 1, agencé de manière à permettre de fixer un support de roue de secours sous le châssis d'un véhicule routier, dans le cas où les faces extérieures verticales des deux éléments profilés allongés (8) du châssis sont directement raccordées à angle droit avec la face inférieure dudit rebord plat horizontal (8a) qui s'étend vers l'intérieur du véhicule, caractérisé en ce que ladite pièce de fixation (7) comprend deux parties plates, perpendiculaires entre elles, dont l'une (7b) est agencée de manière à pouvoir être appliquée sur la face extérieure verticale de l'un desdits éléments profilés (8), et l'autre (7a) est agencée de manière à pouvoir être appliquée sous la face inférieure dudit rebord plat (8a) de cet élément profilé (8), la solidarisation de la pièce de fixation (7) avec l'élément profilé (8) étant réalisée en pinçant le rebord plat (8a) entre la partie plate (7a) de la pièce de fixation (7) et au moins un organe de retenue (10).

3. Dispositif selon la revendication 2, caractérisé en ce que la partie plate verticale (7b) de la pièce de fixation (7) est solidarisée avec la face extérieure verticale de l'élément profilé (8) au moyen de boulons (9).

4. Dispositif selon la revendication 1, agencé de manière à permettre de fixer un support de roue de secours sous le châssis d'un véhicule routier, dans le cas où les deux éléments profilés allongés (18) du châssis présentent chacun à leur partie inférieure, d'une part, un rebord plat horizontal (18a) s'étendant vers l'intérieur du véhicule et, d'autre part, un rebord plat horizontal s'étendant vers l'extérieur du véhicule, ces deux rebords étant placés dans le prolongement l'un de l'autre, caractérisé en ce que ladite pièce de fixation (17) est de forme allongée et présente à chacune de ses extrémités une partie plate agencée de manière à pouvoir être appliquée sous la face inférieure desdits rebords plats de l'un desdits éléments profilés (18), les rebords (18a) de chacun de ces éléments profilés qui s'étendent vers l'intérieur du véhicule étant pincés entre la partie plate (17a) correspondante de la pièce de fixation (17) et au moins un organe de retenue (10) collaborant avec cette dernière pièce.

5. Dispositif selon l'une des revendications 1 à 4, caractérisé en ce que ledit organe de retenue (10) est une bride de fixation.

6. Dispositif selon l'une des revendications 2 à 5, caractérisé en ce que lesdits moyens pour raccorder le support de roue à la pièce de fixation (7, 17) sont constitués par au moins un élément (7c, 19) faisant partie intégrante de cette dernière.

7. Dispositif selon l'une des revendications 2 à 5, caractérisé en ce que lesdits moyens pour raccorder le support de roue à la pièce de fixation (7, 17) sont constitués par au moins un élément (7c, 19) fixé de manière amovible et réglable sur cette pièce de fixation.

8. Dispositif selon les revendications 2 et 6, caractérisé en ce que lesdits moyens pour raccorder le support de roue de secours à la pièce de fixation sont constitués par deux plaques de fixation verticales (7c) solidaires de la pièce de fixation (7) et comportant chacune au moins un trou pour le passage d'un pivot sur lequel le support de roue de secours est articulé.

9. Dispositif selon la revendication 1, pour fixer sous le châssis du véhicule un support de roue de secours comportant deux bras de soutien (4) réunis entre eux à l'une de leurs extrémités et s'écartant l'un de l'autre en direction de l'autre extrémité, en formant un ensemble de forme générale triangulaire, ces bras étant coudés et formant des branches parallèles entre elles, s'étendant vers leurs extrémités libres, caractérisé en ce qu'il comprend deux pièces de fixation (7) munies chacune de moyens de raccordement avec l'une des branches parallèles (4b) des bras (4) du support de roue de secours.

10. Dispositif pour fixer un support de roue de secours sous le châssis d'un véhicule routier, ce châssis comprenant deux éléments profilés allongés (8), parallèles à l'axe longitudinal du véhicule, présentant chacun, à leur partie inférieure, un rebord plat horizontal (8a) s'étendant vers l'intérieur du véhicule, les faces extérieures verticales de chacun des éléments profilés (8) étant directement raccordées, à angle droit, avec la face inférieure dudit rebord plat (8a), ce dispositif étant agencé de manière à permettre le pivotement du support de roue de secours autour d'un axe parallèle à la longueur desdits éléments profilés (8), caractérisé en ce qu'il comporte au moins une pièce de fixation (7) comprenant deux parties plates perpendiculaires entre elles, dont l'une (7b) prend appui sur la face intérieure de la partie verticale du profilé (8) et l'autre (7a) s'appuie sur la face supérieure dudit rebord plat (8a).

## Patentansprüche

1. Vorrichtung zum Befestigen eines Reserveradträgers unter dem Rahmen eines Strassenfahrzeugs, wobei dieser Rahmen zwei langgestreckte Profilteile (8, 18) parallel zur Längsachse des Fahrzeugs aufweist, welche jeweils an ihrem unteren Teil einen flachen horizontalen Kantenteil (8a, 18a) besitzt, der sich gegen das Innere des Fahrzeugs hin erstreckt, wobei diese Vorrichtung so ausgebildet ist, dass sie das Kippen des Reserveradträgers um eine Achse parallel zur Länge der genannten Profilteile erlaubt, dadurch gekennzeichnet, dass sie mindestens ein Befestigungsteil (7, 17) mit mindestens einem flachen Teil (7a, 17a) aufweist, welcher so ausgebildet ist, dass er sich auf dem unteren Teil mindestens eines der genannten Profilteile (8, 18) abstützen kann und mit diesem Profilteil oder diesen Profilteilen (8, 18) durch Einklemmen des genannten flachen Kantenteils (8a, 18a) zwischen dem genannten flachen Teil (7a, 17a) und mindestens einem mit dem Befestigungsteil (7, 17) zusammenwirkenden Halteteil (10) wegnehmbar verbunden ist, sowie Mittel, um den Radträger mit dem genannten Befestigungsteil zu verbinden.

2. Vorrichtung nach Patentanspruch 1, die so ausgebildet ist, dass sie das Befestigen eines Reserveradträgers unter dem Rahmen eines Strassenfahrzeugs in dem Fall erlaubt, in dem die senkrechten Aussenflächen der beiden langgestreckten Profilteile (8) des Rahmens direkt im rechten Winkel mit der Innenseite des genannten flachen horizontalen Kantenteils (8a), der sich gegen das Innere des Fahrzeugs hin erstreckt, verbunden sind, dadurch gekennzeichnet, dass das genannte Befestigungsteil (7) zwei flache senkrecht zueinander stehende Teile aufweist, deren einer (7b) so ausgebildet ist, dass er auf die senkrechte Aussenseite des einen der genannten Profilteile (8) angelegt werden kann, und der andere (7a) so ausgebildet ist, dass er unter die Unterseite des genannten flachen Kantenteils (8a) dieses Profilteils (8) angelegt werden kann, wobei die Verbindung des Befestigungsteils (7) mit dem Profilteil (8) durch Einklemmen des flachen Kantenteils (8a) zwischen dem flachen Teil (7a) des Befestigungsteils (7) und mindestens einem Halteteil (10) hergestellt wird.

3. Vorrichtung nach Patentanspruch 2, dadurch gekennzeichnet, dass der senkrechte flache Teil (7b) des Befestigungsteils (7) mit der senkrechten Aussenseite des Profilteils (8) mittels Bolzen (9) verbunden ist.

4. Vorrichtung nach Patentanspruch 1, die so ausgebildet ist, dass sie das Befestigen eines Reserveradträgers unter dem Rahmen eines Strassenfahrzeugs in dem Fall erlaubt, in dem die beiden langgestreckten Profilteile (18) des Rahmens jeweils in ihrem unteren Teil einerseits einen flachen horizontalen Kantenteil (8a) aufweisen, der sich gegen das Innere des Fahrzeugs hin erstreckt, und andererseits einen horizontalen flachen Kantenteil, der sich gegen die Aussenseite des Fahrzeugs hin erstreckt, wobei diese beiden Kantenteile in gegenseitiger Verlängerung angeordnet sind, dadurch gekennzeichnet, dass das genannte Befestigungsteil (17) eine langgestreckte Form besitzt und an jedem seiner Enden einen flachen Teil aufweist, der so ausgebildet ist, dass er unter die Unterseite der genannten flachen Kantenteile des einen der genannten Profilteile (18) angelegt werden kann, wobei die Kantenteile (18a) jedes dieser Profilteile, die sich gegen das Innere des Fahrzeugs hin erstrecken, zwischen einem entsprechenden Kantenteil (17a) des Befestigungsteils (17) und mindestens einem mit diesem letzteren zusammenwirkenden Halteteil (10) eingeklemmt sind.

5. Vorrichtung nach einem der Patentansprüche 1 bis 4, dadurch gekennzeichnet, dass das genannte Halteteil (10) eine Befestigungsklemme ist.

6. Vorrichtung nach einem der Patentansprüche 2 bis 5, dadurch gekennzeichnet, dass die genannten Mittel zur Verbindung des Radträgers mit dem Befestigungsteil (7, 17) aus mindestens einem Teil (7c, 19) bestehen, der mit letzterem ein Teil bildet.

7. Vorrichtung nach einem der Patentansprüche 2 bis 5, dadurch gekennzeichnet, dass die genannten Mittel zur Verbindung des Radträgers mit dem Befestigungsteil (7, 17) aus mindestens einem Teil (7c, 19) bestehen, welches abnehmbar und verstellbar auf diesem Befestigungsteil angebracht ist.

8. Vorrichtung nach den Patentansprüchen 2 und 6, dadurch gekennzeichnet, dass die genannten Mittel zur Verbindung des Reserveradträgers mit dem Befestigungsteil durch zwei senkrechte Befestigungsplatten (7c) gebildet werden, die fest mit dem Befestigungsteil (7) verbunden sind und jeweils mindestens ein Loch zum Durchgang einer Drehachse aufweisen, um welche der Reserveradträger schwenkbar angeordnet ist.

9. Vorrichtung nach Patentanspruch 1 zur Befestigung, unter dem Rahmen des Fahrzeugs, eines Reserveradträgers, der zwei Tragarme (4) aufweist, die an einem ihrer Enden miteinander verbunden sind und gegen das andere Ende hin auseinandergehen, wobei sie insgesamt eine allgemein dreieckige Form bilden, wobei diese Arme abgewinkelt sind und untereinander parallele Zweige bilden, die sich gegen ihre freien Enden hin erstrecken, dadurch gekennzeichnet, dass sie zwei Befestigungsteile (7) aufweist, deren jedes mit Mitteln zur Verbindung mit einem der parallelen Zweige (4b) der Arme (4) des Reserveradträgers versehen sind.

10. Vorrichtung zur Befestigung eines Reserveradträgers unter dem Rahmen eines Strassenfahrzeugs, wobei dieser Rahmen zwei langgestreckte Profilteile (8) parallel zur Längsachse des Fahrzeugs aufweist, deren jedes in seinem unteren Teil einen flachen horizontalen Kantenteil (8a), der sich gegen das Innere des Fahrzeugs hin erstreckt, aufweist, wobei die senkrechten Aussenseiten des der Profilteile (8) direkt im rechten Winkel mit der Innenseite des genannten Kantenteils (8a) verbunden sind, wobei diese Vorrichtung so ausgebildet ist, dass sie das Verschwenken des Reserveradträgers um eine Achse parallel zur Länge der genannten Profilteile (8) erlaubt, dadurch gekennzeichnet, dass sie mindestens ein Befestigungsteil (7) aufweist, welches zwei zueinander senkrechte flache Teile besitzt, deren einer (7b) sich auf die Innenseite des senkrechten Teils des Profilteils (8) und dessen anderer (7a) sich auf die Aussenseite des genannten flachen Kantenteils (8a) abstützt.

## Claims

1. Device for attaching a spare wheel carrier below the frame of a road vehicle, said frame comprising two elongated profiled members (8, 18) parallel to the longitudinal axis of the vehicle and each provided, at its lower part, with a flat horizontal flange (8a, 18a) extending towards the inside of the vehicle, said device being arranged so that it allows the spare wheel carrier to rotate about an axis which is parallel to the length of said profiled members, characterized in that it comprises at least one mounting part (7, 17) having at least one flat portion (7a, 17a), arranged so that it can bear on the lower portion of at least one of said elongated profiled members (8, 18) and be removably secured to this member or these members (8, 18) by pinching said flat flange (8a, 18a) between said flat portion (7a, 17a), and at least one retaining member (10) which cooperates with the mounting part (7, 17), and means for connecting the wheel carrier to said mounting part.

2. Device according to claim 1, arranged for allowing to attach a spare wheel carrier below the frame of a road vehicle in the case where the outer vertical faces of the two elongated profiled members (8) are directly connected, at a right angle, with the lower face of said flat horizontal flange (8a) which extends towards the inside of the vehicle, characterized in that said mounting part (7) includes two flat portions, which are parallel to each other, wherein one of said flat portions (7b) is arranged so that it can be applied onto the outer vertical face of one of said elongated profiled members (8), and the other flat portion (7a) is arranged so that it can be applied onto the lower face of said flat flange (8a) of said elongated profiled member, the mounting part (7) being secured to the elongated profiled member (8) by pinching the flat flange (8a) between the flat portion (7a) of the mounting part (7) and at least one retaining member (10).

3. Device according to claim 2, characterized in that the vertical flat portion (7b) of mounting part (7) is secured to the vertical outer face of the elongated profiled member (8) by means of bolts (9).

4. Device according to claim 1, arranged for allowing to attach a spare wheel carrier below the frame of a road vehicle in the case where the two elongated profiled members (18) of the vehicle frame are each provided, at their lower part, on one hand with a flat horizontal flange (18a) which extends towards the inside of the vehicle and, on the other hand, with a flat horizontal flange which extends towards the outside of the vehicle, said two flanges being placed in the prolongation of one another, characterized in that said mounting part (17) has an elongated shape and is provided, at each of its ends, with a flat portion arranged so that it can be applied onto the lower face of said flat flanges of one of said elongated profiled members (18), the flanges (18a) of each of said elongated profiled members which extend towards the inside of the vehicle being pinched between the corresponding flat portion (17a) of the mounting part (17) and at least one retaining member (10) cooperating with that latter part.

5. Device according to one of claims 1 to 4, characterized in that said retaining member (10) is a clamp.

6. Device according to one of claims 2 to 5, characterized in that said means for connecting the wheel carrier to the mounting part (7, 17) consist of at least one part (7c, 19) which is integral with the latter.

7. Device according to one of claims 2 to 5, characterized in that said means for connecting the wheel carrier to the mounting part (7, 17) consist of at least one part (7c, 19) which is removably and adjustably secured to said mounting part.

8. Device according to claims 2 and 6, characterized in that said means for connecting the wheel carrier to the mounting part consist of two vertical securing plates (7c) which are integral with the mounting part (7) and are each provided with at least one hole for allowing the passage of an axis about which the wheel carrier is pivotably mounted.

9. Device according to claim 1 for attaching below the frame of the vehicle, a spare wheel carrier which comprises two supporting arms (4) which are linked together at one of their end portions and part from one another towards the other end portion, thus forming a generally triangular-shaped unit, said arms being bent and forming branches which, towards their free ends, are parallel with one another, characterized in that it comprises two mounting parts (7) which are each provided with connecting means to one of the parallel branches (4b) of the arms (4) of the spare wheel carrier.

10. Device for attaching a spare wheel carrier below the frame of a road vehicle, said frame comprising two elongated profiled members (8), parallel to the longitudinal axis of the vehicle, and each provided, at its lower part, with a flat horizontal flange (8a) extending towards the inside of the vehicle, the vertical outer faces of each of said profiled members (8) being directly connected, at right angle, to the lower face of said flat flange (8a), said device being arranged for allowing the wheel carrier to pivot about an axis parallel with the length of said profiled members (8), characterized in that it comprises at least one mounting part (7) including two flat portions, which are perpendicular to each other, one of these portions (7b) bearing on the inner face of the vertical portion of the profiled member (8) and the other (7a) bearing on the upper face of said flat flange (8a).
